# EUROPÄISCHE PATENTSCHRIFT

(11) **EP 1 006 342 B1**
(45) Veröffentlichungstag und Bekanntmachung des Hinweises auf die Patenterteilung: **03.09.2003**
(21) Anmeldenummer: 99123615.9
(22) Anmeldetag: 26.11.1999
(51) Int. Cl.: G01D 5/244

(54) **Markierungsverfahren von Messspuren**
Marking method for measuring tracks
Procédé de marquage des pistes de mesure

(30) Priorität: 03.12.1998 CH 240498
(43) Veröffentlichungstag der Anmeldung: 07.06.2000
(73) Patentinhaber: Schneeberger Holding AG, 4914 Roggwil (CH)
(72) Erfinder: Schneeberger, Hans-Martin, 4900 Langenthal (CH); Way, Frederic L., 4932 Lotzwil (CH)
(74) Vertreter: EGLI-EUROPEAN PATENT ATTORNEYS

(56) Entgegenhaltungen:
- EP-A- 0 395 374
- US-A- 4 490 914
- US-A- 4 932 131

## Beschreibung

Die Erfindung betrifft ein Verfahren zur Aufbringung einer zur Längen-, Winkelmessung oder dergleichen dienenden Markierung auf einem Träger, bei dem in einem Markierungsschritt ein Mittel zur Erzeugung einer Spur mit Markierungen über den Träger geführt wird und durch Einwirkung auf den Träger in diesem an vorbestimmten Positionen des Trägers dauerhafte Markierungen aufgebracht werden.

In vielen Bereichen der Technik ist es erforderlich, Positionen von Maschinen, Maschinenbauteilen etc. zu bestimmen. Hierzu ist bereits eine Vielzahl von Messverfahren bekannt geworden. Ein erstes Beispiel hierfür ist das Durchlicht- oder Reflexionsmessverfahren mit Glasmassstäben, die in alternierender Weise Hell-/Dunkel-Markierungen aufweisen. Ein weiteres Beispiel sind magnetische Messverfahren mit auf einem Träger alternierend aufgebrachten Nord- und Südpolen. Schliesslich sind auch Messverfahren bekannt geworden, bei denen die "Markierungen" induktiv abgetastet werden. Diese Aufzählung von Messverfahren, für die sich die vorliegende Erfindung eignet, ist lediglich beispielhaft und nicht abschliessend.

All diesen Messverfahren ist gemeinsam, dass sie Markierungen verwenden, die unterschiedliche physikalische Eigenschaften aufweisen. Diese Unterschiede werden durch geeignete Sensoren detektiert. Da die Länge jeder einzelnen Markierung vorbekannt ist, kann durch die Anzahl der detektierten "Eigenschaftenwechsel" die gewünschte Längenoder Winkelmessung durchgeführt werden.

Eine erhebliche Fehlerquelle bei all diesen Messverfahren besteht allerdings darin, dass die einzelnen Markierungen nicht die gewünschten Eigenschaften haben. Eine Längenmessung ist beispielsweise dann nicht exakt, wenn eine der Markierungen sich an einer anderen als der vorgesehenen Position befindet, oder ihre Länge nicht mit der vorgegebenen Länge übereinstimmt.

Der vorliegenden Erfindung liegt deshalb die Aufgabe zugrunde, ein Verfahren und eine Vorrichtung zu schaffen, mit denen sich die Messgenauigkeit solcher Messverfahren verbessern lässt.

Diese Aufgabe wird bei einem eingangs genannten Verfahren erfindungsgemäss dadurch gelöst, dass Ist-Positionen von Markierungen der Spur gegenüber einem Referenzpunkt gemessen werden, die Differenzen zwischen gemessenen Ist-Positionen und Soll-Positionen bestimmt werden und bei vorhandenen Differenzen in einem weiteren Markierungsschritt auf die gleiche Spur des Trägers korrigierte Markierungen aufgebracht werden, wobei Positionen von Markierungen des ersten Markierungsschritt gegenüber Positionen von Markierungen des zweiten Markierungsschrittes um von den Differenzen abhängigen Werten versetzt sind. Die Aufgabe wird ausserdem durch die Anlage gemäss Anspruch 15 gelöst.

Erfindungsgemäss wird also eine Kompensation von Positionierungsfehlern der Markierungen durchgeführt. Indem in zumindest einem weiteren Markierungsschritt die Positionen bzw. die Länge oder sonstige physikalische Eigenschaften von bereits erzeugten Markierungen korrigiert werden, lässt sich die Genauigkeit derartiger Messverfahren erhöhen. Für die Genauigkeit des Messverfahrens ist entscheidend, dass sich beispielsweise die Übergänge von einem magnetischen Nord- zu einem darauf folgenden Südpol bzw. umgekehrt, oder Übergänge von anderen Eigenschaftenwechseln, nun an den vorgegebenen Positionen befinden. Hierdurch ergibt sich eine konstante Länge der Pole bzw. Markierungen, die der jeweils vorgegebenen Inkrementalteilung entspricht.

In der Regel wird bei einem Messverfahren, das eine Spur, wie die mit dem erfindungsgemässen Verfahren erzeugten Markierungen benutzt, von einem Referenzpunkt ausgegangen und üblicherweise nur die Anzahl der Eigenschaftenwechsel gezählt. Als Eigenschaftenwechsel kommen beispielsweise der Wechsel der Richtung der Magnetfeldstärke bzw. -induktion und damit der Wechsel von einem Pol zu einem anderen Pol in Frage. Durch Multiplikation mit der Grösse der Inkrementalteilung kann dann die Position oder der Verfahrweg der Messeinrichtung genauer bestimmt werden. Da somit für die Genauigkeit des Messverfahrens selbst die Genauigkeit der Positionierung der Übergänge von einer Markierung der Spur zur darauffolgenden Markierung ganz entscheidend ist, ist es erfindungsgemäss bevorzugt, dass auch bei der Erzeugung der Spur in erster Linie die Abweichungen der Übergänge von ihren Soll-Positionen korrigiert werden.

Dieses Verfahren zur Aufbringung von Markierungen stellt eine Abkehr von der bisher angewandten Entwicklungsrichtung zur Verbesserung der Messgenauigkeit dar. Diese sah nämlich entweder stets Anstrengungen vor, die Positioniergenauigkeit beim einzigen Markierungsschritt pro Spur zu erhöhen oder zusätzlich zur Messspur eine weitere Korrekturspur aufzubringen (siehe US Patentschrift 4 932 131 ). Ausserdem geht dieses Verfahren - anders als bisherige Markierungsverfahren - davon aus, dass im wesentlichen nur die Positionen der Eigenschaften- oder Polwechsel entscheidend sind, die in Form eines vorgegebenen gleichmässigen Rasters einzuhalten sind. In diesen Raster sind die Pole anzuordnen, deren Längen nur sekundäre Bedeutung haben und sich aus dem Raster ergeben.

Damit der zweite bzw. jeder weitere Markierungsschritt zur Kompensation von Fehlern von einem oder mehreren vorausgegangenen Markierungsschritten besonders einfach und mit möglichst wenig Aufwand durchzuführen ist, kann vorgesehen sein, dass bei diesen Markierungsschritten sämtliche zuvor erzeugten Markierungen der Spur überfahren und nochmals markiert werden. Der auf diese Weise neuerlich durchgeführte weitere Markierungsschritt unterscheidet sich deshalb nur dadurch vom vorausgegangenen Markierungsschritt, dass bei jenen Markierungen, bei denen eine Abweichung zwischen Soll- und Istwerten der Länge, Positionen oder sonstigen Eigenschaften festgestellt wird, eine Korrektur anhand der Differenz zwischen Soll- und Istwerten durchgeführt wird.

Das erfindungsgemässe Markierungsverfahren lässt sich sowohl in "analogen" als auch in "digitalen" Messverfahren anwenden. In diesem Zusammenhang sind unter "analogen" Messverfahren solche Verfahren zu verstehen, bei denen die Stärke oder Intensität von Markierungen durch mehrmaliges Markieren verändert werden kann. Ein Beispiel hierfür sind magnetische Messverfahren. Unter "digitalen" Messverfahren sind hingegen solche Verfahren zu verstehen, deren Markierungen nur zwei Zustände zulassen, nämlich markiert oder nicht markiert. Ein Beispiel hierfür sind die bereits erwähnten optischen Messverfahren auf Basis von Glasmassstäben. Ein weiteres Beispiel sind Verfahren, die durch Ausstanzungen erzeugte Markierungen verwenden und bei denen das Messprinzip auf der Feststellung Material vorhanden Ja/Nein beruht.

In Verbindung mit analogen Markierungsverfahren hat es sich als bevorzugt herausgestellt, wenn bei der Durchführung eines weiteren Markierungsschrittes der Wert zur Kompensation des Positionierungs- oder Aufbringungsfehlers den Betrag der zweifachen Differenz zwischen dem Wert der Soll- und der Ist-Position hat. Die Korrekturrichtung ist hierbei stets entgegengesetzt zur festgestellten Abweichungsrichtung des Aufbringungsfehlers. Durch die Überlagerung der beiden letzten Markierungsschritte stellt sich somit ein (arithmetischer) Mittelwert ein, der exakt dem vorgesehenen Sollwert entspricht.

Im Zusammenhang mit digitalen Markierungsverfahren wird vorzugsweise ein Wert zur Kompensation von Aufbringungsfehlern gebildet und benutzt, welcher der einfachen Differenz zwischen dem Soll- und dem gemessenen Istwert der jeweiligen physikalischen Grösse entspricht. Da hier keine Überlagerung sondern lediglich ein Überschreiben stattfindet und die neue Position der entsprechenden Markierung der durch den letzten Markierungsschritt erzeugten Ist-Position entspricht, reicht der einfache Wert der ursprünglich vorhandenen Differenz zur Korrektur der Abweichung aus.

Das erfindungsgemässe Verfahren und die erfindungsgemässe Anlage lassen sich prinzipiell unabhängig vom späteren Verwendungszweck der Markierungen nutzen. So ist es möglich, Spuren zu erzeugen, die für relative oder für absolute Messverfahren genutzt werden. Absolute Messverfahren zeichnen sich üblicherweise dadurch aus, dass mehrere Spuren vorhanden sind, deren Teilungen unterschiedlich gross sind. Ausserdem wird bei absoluten Messverfahren eine Länge oder ein Winkel in Bezug auf eine fest vorgegebene und in der Regel unveränderbare Bezugsgrösse (Nullpunkt) gemessen. Das erfindungsgemässe Verfahren kann für jede dieser Spuren eines absoluten Messverfahrens angewendet werden. Selbstverständlich muss jedoch nur bei solchen Spuren mehr als ein Markierungsschritt durchgeführt werden, bei denen Aufbringungsfehler festgestellt werden. Werden bei mehreren Spuren Aufbringsfehler gemessen, so können die weiteren Markierungsschritte für jede dieser Spuren - ebenso wie die ersten Markierung- und Messschritte - auch gleichzeitig durchgeführt werden.

Das erfindungsgemässe Verfahren lässt sich auch bei "quasi-absoluten" Messverfahren einsetzen, die eine Spur von abstandskodierten Referenzmarken benutzen. Hierbei handelt es sich um Markierungen, die mit unterschiedlichen, aber bestimmten Abständen zueinander angeordnet sind. Da die Abstände aufeinanderfolgender Markierungen bekannt sind, kann durch das Überfahren zweier dieser Markierungen bestimmt werden, an welcher Stelle sich der Sensor des Messystems befindet. Das Messverfahren mit abstandskodierten Referenzmarken ist beispielsweise in der DE-PS 24 16 212 beschrieben.

Ebenso ist das Verfahren auch für Markierungsspuren von relativen Messverfahren anwendbar. Bei diesen Messverfahren werden keine auf einen fest vorgegebenen Referenzpunkt bezogene Abstände, sondern Abstände von einer beliebigen ersten Marke zu einer beliebigen zweiten Marke gemessen.

Weitere bevorzugte Ausgestaltungen der Erfindung ergeben sich aus den abhängigen Ansprüchen.

Die Erfindung wird anhand eines in den Figuren schematisch dargestellten Ausführungsbeispiels näher erläutert; es zeigen:
- Fig. 1: eine Seitenansicht einer stark schematisiert dargestellten erfindungsgemässen Magnetisierungsanlage;
- Fig. 2a: eine Spur einer Magnetisierung;
- Fig. 2b: der Verlauf der Magnetisierung über der Länge L eines Magnetbandes;
- Fig. 3: ein Ablaufschema des erfindungsgemässen Markierungsverfahrens.

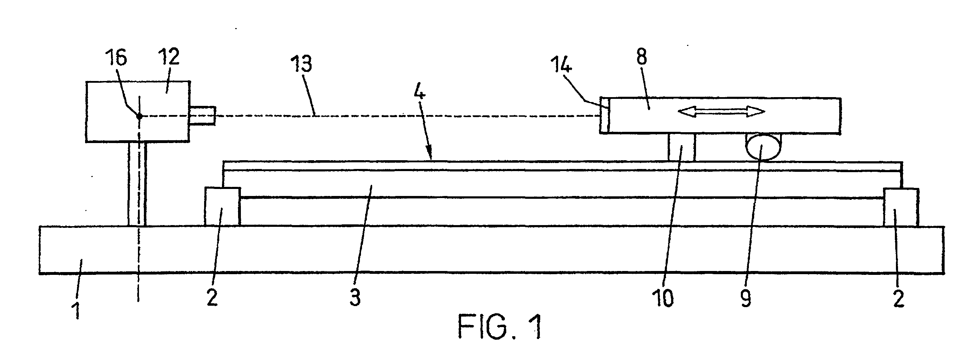

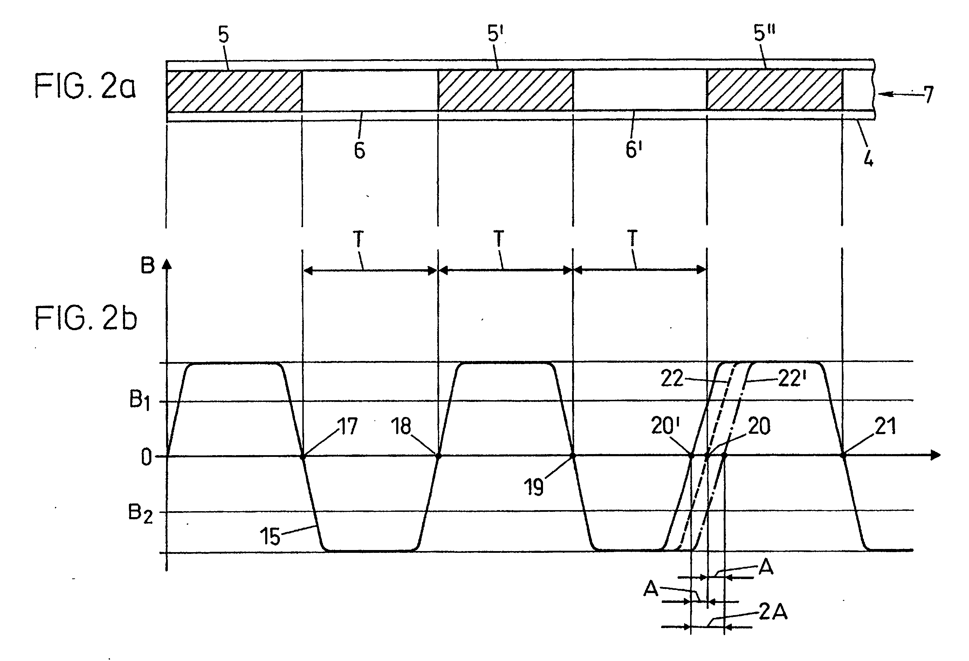

In Fig. 1 ist eine Anlage gezeigt, mit der sich das erfindungsgemässe Verfahren durchführen lässt. Diese Anlage weist ein Gestell 1 auf, auf dem sich eine Spanneinrichtung 2 befindet. In der Spanneinrichtung 2 ist eine Schiene 3 einer Linearbewegungsführung eingespannt, auf deren Oberseite ein als Träger für Markierungen dienendes Magnetband 4 befestigt ist. Das Magnetband 4 weist ein ferromagnetisches Material auf, in das magnetische Markierungen in Form von Nord- und Südpolen 5, 6 (Fig. 2a) eingebracht werden sollen, die entlang einer Inkrementalspur 7 und einer dazu parallel verlaufenden (nicht dargestellten) Referenzspur angeordnet sind, die zu einer Vorrichtung für ein relatives Messverfahren gehören.

Oberhalb der Schiene 3 ist ein angetriebener Magnetisierwagen 8 angeordnet, der mit einem magnetischen Schreib- 9 und einem magnetischen Lesekopf 10 versehen ist. Der Magnetisierwagen 8 ist angetrieben und parallel zur Schiene 3 verfahrbar. Auf dem Gestell 1 ist ferner ein in etwa in Längsrichtung der Schiene 3 ausgerichtetes Laserinterferometer 12 als Bestandteil einer Messeinrichtung angeordnet, dessen Laserstrahl 13 auf einen Spiegel als Reflexionsfläche an einer Stirnfläche 14 des Magnetisierwagens 8 gerichtet ist.

Mit dem Schreibkopf können in einem magnetisierbaren Material magnetische Spuren, wie in Fig. 2a gezeigt, erzeugt werden. Diese setzen sich aus alternierend angeordneten magnetischen Nord- 6 und Südpole 5 zusammen. Zur Erzeugung einer magnetischen Induktion B weist der Schreibkopf 9 - ähnlich wie ein Tonkopf eines Cassettenrecorders - eine (nicht dargestellte) strombeaufschlagbare Spule auf. Durch entsprechende Polung bzw. Umpolung der Spule kann in dem zu magnetisierenden Material eine Orientierung der Feldlinien erzeugt werden, die in dem Magnetband 4 entweder einen Nordoder ein Südpol erzeugen.

Zur Aufbringung einer magnetischen Spur 7 wird deshalb der Schreibkopf 9 mit einer konstanten Geschwindigkeit und in konstantem Abstand über das Magnetband 4 geführt und im Abstand der Inkrementalteilung T - die im vorliegenden Beispiel 200 µm beträgt - wird schlagartig eine Umpolung der Spule des Schreibkopfes 9 vorgenommen, die dann bei konstanter Stromstärke über die Länge der Inkrementalteilung beibehalten wird. Die Stromstärke I ist so bemessen, dass im Material des Magnetbandes 4 im Bereich der einzelnen Pole 5, 6 eine magnetische Sättigung eintritt. Im Bereich der Polübergänge ist die Magnetisierung ausserhalb des Sättigungsbereiches. Hierdurch hat die magnetische Induktion B der Spur 7 einen Verlauf, wie sie durch die Linie 15 in Fig. 2b dargestellt ist.

Mit dem in Vorschubrichtung des ersten Markierungsschrittes hinter dem Schreibkopf 9 des Magnetisierwagens angeordneten Lesekopfes 10 werden bereits während der Aufbringung der Markierungen die unmittelbar zuvor erzeugten Markierungen gelesen. Selbstverständlich ist es zum Lesen bzw. Vermessen der Spur 7 auch möglich, den Wagen 8 in einem gesonderten Messschritt nochmals über das Band zu führen. Zusammen mit den durch das Laserinterferometer 12 gewonnenen Positionsinformationen und dem in Vorschubrichtung bekannten Abstand zwischen der Reflexionsfläche des Wagens 8 und dem Lesekopf 10 können Positionen auf dem Magnetband 4 in bezug auf einen Referenzpunkt 16 des Laserinterferometers 12 exakt bestimmt werden. Prinzipiell kann aber ein beliebiger Referenzpunkt ausgewählt werden, weil nicht zwingend die absolute Position einer Markierung von Bedeutung ist, sondern die Länge, die sich aus Anfang und Ende der jeweiligen Markierung ergibt.

Bei diesem Messschritt werden die Positionen bestimmt, bei denen die vom Lesekopf 10 aufgenommene Induktion B gleich Null ist, d.h. die Magnetfeldstärke ihre Richtung wechselt. Derartige Nulldurchgänge 17, 18, 19, 20, 21 entsprechen dem Übergang von einem Magnetpol zum jeweils nächsten. Sämtliche Ist-Positionsdaten aller Markierungen werden zusammen mit den bereits zuvor ermittelten Soll-Positionsdaten in einer nicht dargestellten EDV-Anlage elektronisch gespeichert. Die Soll-Positionsdaten wurden bereits zur Bestimmung der Umpolzeitpunkte der Spule des Schreibkopfes 9 bei dem zuvor durchgeführten Markierungsschritt genutzt. Anschliessend werden die Abweichungen der gemessenen Positionen von den Soll-Positionen bestimmt und ebenfalls elektronisch gespeichert. Selbstverständlich wäre es in anderen Ausführungsformen der Erfindung grundsätzlich auch möglich, nicht Nulldurchgänge sondern andere Werte bzw. Beträge von physikalischen Grössen zu detektieren und anhand diesen Korrekturwerte zu bestimmen und abzuspeichern.

Nach diesem Verfahrensschritt beginnt die Korrekturfahrt des Magnetisierwagens in Form eines weiteren Markierungsschrittes der gleichen Spur. Hierzu kann der Magnetisierwagen 8 über das Magnetband 4 vorzugsweise in gleicher Weise, d.h. insbesondere mit gleicher konstanter Vorschubgeschwindigkeit und in die gleiche Vorschubrichtung, wie beim ersten Markierungsschritt fahren. Es ist jedoch prinzipiell möglich, dass der Magnetisierwagen mit einer anderen, eventuell auch nicht konstanten Geschwindigkeit verfährt. Entscheidend ist lediglich, dass exakt bei Erreichen der vorgegebenen Positionen jeweils eine Umpolung stattfindet. Im gezeigten Ausführungsbeispiel hatten die ersten drei Umpolungen 17, 18, 19 zum richtigen Zeitpunkt stattgefunden, weshalb die Magnetfeldstärkewechsel sich an den vorgesehenen Positionen befinden. Der zweite Markierungsschritt unterscheidet sich deshalb bis hierhin nicht vom ersten Markierungsschritt. Da jedoch beim vierten Nulldurchgang 20 der Wechsel um eine Differenz A von der Soll-Position abweicht und dadurch auch der Pol um T - A von der Pol-Solllänge T zu kurz ist, wird nun der Strom erst bei einer um 2A verlängerten Strecke umgepolt. Die Verlängerung der Strecke bezieht sich auf die bisherige Ist-Position des Nulldurchganges 20'.

Hierdurch findet nun eine Überlagerung der Magnetisierungen des ersten und des zweiten Markierungsschrittes statt. Die daraus resultierende Magnetisierung der Spur 7 gibt die Kurve 22 in Fig. 2b wieder, während die durch den zweiten Markierungsschritt durchgeführte Magnetisierung durch die Kurve 22' dargestellt ist. In der Darstellung von Fig. 2b sind die Kurven 22 und 22' lediglich zwischen den Sättigungsbereichen der Pole 6' und 5" gezeigt. Anhand der drei Kurven 15, 22 und 22' ist zu erkennen, dass an der Soll-Position des Nulldurchganges 20 die Addition der Magnetisierungswerte des ersten und des zweiten Markierungssschrittes B₁ und B₂ eine resultierende magnetische Induktion B = 0 Tesla ergibt, da die Magnetisierungswerte B₁ und B₂ den gleichen Betrag aufweisen, sich aber durch ihr Vorzeichen voneinander unterscheiden. Es findet somit eine Parallelverschiebung der Rampe der Magnetisierungskurve statt, wodurch der Nulldurchgang nun durch die Sollposition geht und der ursprüngliche Pol 6' um die Strecke A verlängert wird. Der auf den Pol 6' folgende Pol 5" wird hingegen um die Strecke A verkürzt. Auf die gleiche Weise werden in diesem zweiten Markierungsschritt sämtlichen weiteren Abweichungen der Ist-Positionen von den Soll-Positionen der Nulldurchgänge der Magnetisierungen (Polgrenzen) korrigiert.

Nach Abschluss des zweiten Markierungsschrittes wird in einem zweiten Messschritt überprüft, ob bei der resultierenden Spur sich sämtliche Positionen der Nulldurchgänge an den vorbestimmten Positionen befinden. Werden wieder Abweichungen festgestellt, kann in einem weiteren Markierungsschritt versucht werden, auch diese Differenz zu eliminieren. Weitere Mess- und Markierungsschritte können folgen, bis sämtliche Abweichungen den vorgegebenen Toleranzen entsprechen.

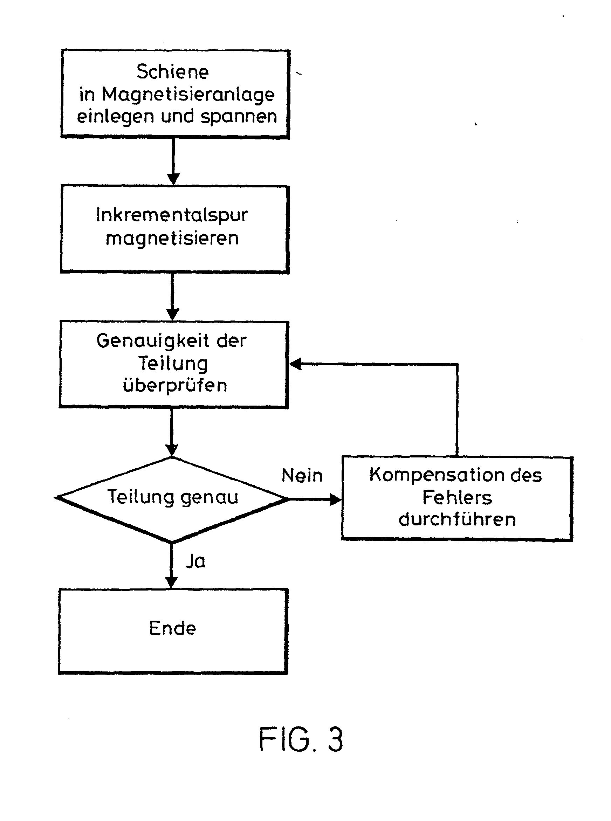

In Fig. 3 ist das erfindungsgemässe Markierungsverfahren für die Markierung einer Inkrementalspur auf einer Schiene einer Linearbewegungsführung in Form eines Ablaufdiagrammes graphisch dargestellt.

## Patentansprüche

1. Verfahren zur Aufbringung einer zur Längen-, Winkelmessung oder dergleichen dienenden Markierung auf einem Träger, bei dem in einem Markierungsschritt ein Mittel zur Erzeugung einer Spur mit Markierungen über den Träger geführt wird und durch Einwirkung auf den Träger in diesem an vorbestimmten Positionen des Trägers Markierungen aufgebracht werden, bei dem Ist-Positionen von Markierungen der Spur gegenüber einem Referenzpunkt gemessen werden, Differenzen zwischen gemessenen Ist-Positionen und Soll-Positionen bestimmt werden bei vorhandenen Differenzen in einem, **dadurch gekennzeichnet, daß** weiteren Markierungsschritt auf die gleiche Spur des Trägers korrigierte Markierungen aufgebracht werden, wobei Positionen von Markierungen des ersten Markierungsschritt gegenüber Positionen von Markierungen des zweiten Markierungsschrittes um von den Differenzen abhängigen Werten verändert sind.

2. Verfahren nach Anspruch 1, **dadurch gekennzeichnet, dass** Ist-Positionen von Wechsel von einer Markierung zur jeweils darauffolgenden Markierung gemessen, Differenzen zu den jeweiligen Soll-Positionen der Wechsel bestimmt werden und durch den zweiten Markierungsschritt die Positionen der Wechsel, welche nach dem ersten Markierungsschritt eine Differenz zwischen Ist- und Soll-Wert aufweisen, um einen von der zuvor bestimmten Differenz abhängigen Wert auf der Spur versetzt sind.

3. Verfahren nach einem oder beiden der vorhergehenden Ansprüche, **dadurch gekennzeichnet, dass** die Markierung des zweiten Markierungsschrittes der Markierung des ersten Markierungsschrittes überlagert wird, wodurch sich eine aus den beiden Markierungen resultierende Markierung ergibt.

4. Verfahren nach einem oder mehreren der vorhergehenden Ansprüche, **dadurch gekennzeichnet, dass** der Wert, um den Markierungen des zweiten Markierungsschrittes gegenüber Markierungen des ersten Schrittes versetzt sind, der doppelten Differenz zwischen Ist- und Sollwert entspricht.

5. Verfahren nach einem oder mehreren der vorhergehenden Ansprüchen 1 bis 3, **dadurch gekennzeichnet, dass** der Wert, um den Markierungen des zweiten Markierungsschrittes gegenüber Markierungen des ersten Schrittes versetzt sind, der Differenz zwischen Ist- und Sollwert entspricht.

6. Verfahren nach einem oder mehreren der vorhergehenden Ansprüche, **dadurch gekennzeichnet, dass** sich an die ersten beiden Markierungsschritte und an den ersten Messschritt solange jeweils ein weiterer Mess- und Markierungsschritt anschliesst bis durch Überlagerung der Markierungsschritte sämtliche Differenzen zwischen Ist- und Sollwerten innerhalb von vorgegebenen Toleranzen liegen.

7. Verfahren nach einem oder mehreren der vorhergehenden Ansprüche, **dadurch gekennzeichnet, dass** sich die Messung der Positionen einzelner Markierungen auf einem Träger auf einen einzigen Referenzpunkt bezieht.

8. Verfahren nach einem oder mehreren der vorhergehenden Ansprüche, **dadurch gekennzeichnet, dass** zur Messung eines Wechsels von aufeinanderfolgenden Markierungen ein Soll-/Ist-Abgleich für einen Wert oder einen Betrag einer bestimmten physikalischen Grösse durchgeführt wird.

9. Verfahren nach einem oder mehreren der vorhergehenden Ansprüche, **dadurch gekennzeichnet, dass** zur Messung eines Wechsels von aufeinanderfolgender Markierungen eines Markierungsschrittes Positionen von Nulldurchgängen von physikalischen Grössen bestimmt werden.

10. Verfahren nach einem oder mehreren der vorhergehenden Ansprüche, **dadurch gekennzeichnet, dass** die Markierungen magnetische Pole sind.

11. Verfahren nach Anspruch 10, **dadurch gekennzeichnet, dass** sich eine magnetische Induktion der Pole nach jedem Markierungsschritt im Bereich der magnetischen Sättigung des Trägermaterials befindet und jeder Bereich des Wechsels von einer Markierung zu einer darauffolgenden Markierung der Spur einen Nulldurchgang der magnetischen Induktion aufweist.

12. Verfahren nach einem oder mehreren der vorhergehenden Ansprüche, **dadurch gekennzeichnet, dass** zur Messung der Position der Istwerte der Markierungen ein Laserinterferometer eingesetzt wird.

13. Verfahren nach einem oder mehreren der vorhergehenden Ansprüche, **dadurch gekennzeichnet, dass** noch während der Durchführung eines Markierungsschrittes mit der Vermessung der Positionen der unmittelbar zuvor erzeugten Markierungen begonnen wird.

14. Verfahren nach einem oder mehreren der vorhergehenden Ansprüche, **dadurch gekennzeichnet, dass** sich der Träger beim weiteren Markierungsschritt in der gleichen Aufspannung befindet wie beim vorausgegangenen Markierungsschritt.

15. Anlage zur Erzeugung von Markierungen (5,6) auf einem Träger (4), welche eine Markierungseinrichtung aufweist, die mit einem Schreibelement (9) zur Aufbringung einer Spur (7), die mehrere Markierungen (5,6) umfasst, einer Spanneinrichtung (2) zur Anordnung des Trägers (4) in der Anlage und einer Verfahreinrichtung (8) versehen ist, mit der eine Relativbewegung zwischen dem Träger (4) und dem Schreibelement (9), erzeugbar ist, wobei die Anlage eine Messeinrichtung, mit welcher Ist-Positionen der Markierungen (5,6) oder bestimmter Stellen der Markierungen (5,6) feststellbar sind, Mittel zum Abspeichern der gemessenen Ist-Positionen, sowie Mittel zum Vergleich der Ist-Positionen mit vorgegebenen Soll-Positionen der Markierungen (5,6) oder bestimmten Stellen der Markierungen (5,6) und zur Bestimmung der Abweichung zwischen den Ist- und Sollpositionen aufweist, **dadurch gekennzeichnet, daß** die Anlage weiter eine Steuerung aufweist, mit welcher über die Spur mit Markierungen (5,6) erneut Markierungen auf dem Träger (4) aufbringbar sind, wobei Positionen dieser weiteren Markierungen jeweils um einen Wert korrigiert sind, der von den zuvor bestimmten Abweichungen abhängt.

16. Anlage nach Anspruch 15, **dadurch gekennzeichnet, dass** mit der Anlage magnetische Markierungen (5,6) erzeugbar sind, diese hierzu eine mit einem magnetischen Schreibkopf (9) versehene Markierungseinrichtung umfasst, die Messeinrichung einen magnetischen Lesekopf (10) aufweist und Mittel zur Umpolung des Schreibkopfes (9) vorhanden sind, wobei mit der Steuerung anhand der von den Abweichungen abhängigen Werten die Umpolung vornehmbar ist.

17. Verwendung einer Anlage nach einem oder beiden der Ansprüche 15 und 16, **dadurch gekennzeichnet, dass** mit ihr Markierungen eines Längenmesssystems einer Linearbewegungsführung erzeugbar sind.

## Claims

1. A method of applying a marking to a substrate, the marking being used for a measurement of length, angle, etc., whereby in a marking step a means for producing a track with markings is guided over the substrate, and by acting on the substrate, markings are applied to it at predetermined positions in the substrate, actual positions of markings of the track being measured with respect to a reference point, differences being determined between the measured actual positions and the ideal positions, **characterized in that** when differences are found, corrected markings are applied to the same track of the substrate in another marking step, whereby positions of markings of the first marking step are altered by values which depend on the differences in comparison with positions of markings of the second marking step.

2. The method according to Claim 1, **characterized in that** actual positions of the change in a marking relative to the following marking are measured, and differences in comparison with the particular ideal positions of the changes are determined, and by means of the second marking step, the positions of the changes having a difference between the actual value and the ideal value after the first marking step are offset on the track by a value which depends on the difference determined previously.

3. The method according to one or both of the preceding claims, **characterized in that** the marking of the second marking step is superimposed on the marking of the first marking step, which yields a marking that is the result of the two markings.

4. The method according to one or more of the preceding claims, **characterized in that** the value by which markings of the second marking step are offset with respect to the markings of the first step corresponds to twice the difference between the actual value and the ideal value.

5. The method according to one or more of the preceding Claims 1 through 3, **characterized in that** the value by which markings of the second marking step are offset with respect to markings of the first step corresponds to the difference between the actual value and the ideal value.

6. The method according to one or more of the preceding claims, **characterized in that** another measurement and marking step is performed following the first two marking steps and the first measurement step until, by superimposing the marking steps, all the differences between the actual values and the ideal values are within predetermined tolerances.

7. The method according to one or more of the preceding claims, **characterized in that** the measurement of the positions of individual markings on a substrate is based on a single reference point.

8. The method according to one or more of the preceding claims, **characterized in that** for measurement of a change in successive markings, an equalization of the theoretical and ideal values is performed for a value or an absolute amount of a certain physical variable.

9. The method according to one or more of the preceding claims, **characterized in that** positions of zero crossings of physical variables are determined for the measurement of a change in successive markings of a marking step.

10. The method according to one or more of the preceding claims, **characterized in that** the markings are magnetic poles.

11. The method according to Claim 10, **characterized in that** magnetic induction of the poles is in the range of magnetic saturation of the substrate material after each marking step, and each range of the change from one marking to a subsequent marking of the track has a zero crossing of the magnetic induction.

12. The method according to one or more of the preceding claims, **characterized in that** a laser interferometer is used to measure the position of the actual values of the markings.

13. The method according to one or more of the preceding claims, **characterized in that** measurement of the positions of the markings created immediately previously is begun while a marking step is still being performed.

14. The method according to one or more of the preceding claims, **characterized in that** during the additional marking step, the substrate is still in the same clamping position as in the preceding marking step.

15. An installation for producing markings (5, 6) on a substrate (4) which has a marking device that is equipped with a recording element (9) for applying a track (7) which comprises a plurality of markings (5, 6), a chucking device (2) for arrangement of the substrate (4) in the installation and a traversing device (8), with which a relative movement can be created between the substrate (4) and the recording element (9), whereby the installation has a measurement device with which the actual positions of the markings (5, 6) or certain locations in the markings (5, 6) can be ascertained, means for storing the measured actual positions and means for comparing the actual positions with predetermined ideal positions of the markings (5, 6) or certain locations in the markings (5, 6), and for determining the deviation between the actual position and the ideal position, **characterized in that** the installation also has a controller with which markings (5, 6) can be applied again to the substrate (4) over the track with the markings (5, 6), the positions of these additional markings being corrected by a value which depends on the deviations determined previously.

16. The installation according to Claim 15, **characterized in that** magnetic markings (5, 6) can be produced with said installation, comprising a marking device equipped with a magnetic writing head (9), the measurement device having a magnetic reading head (10) and means are present for reversing the polarity of the writing head (9), whereby the reversal of polarity can be performed with the controller on the basis of the values, which depend on the deviations.

17. A use of an installation according to one or both of Claims 15 and 16, **characterized in that** markings of a length measurement system of a linear movement guidance device can be produced with it.

## Revendications

1. Procédé d'apposition d'un marquage servant à la mesure de longueur, d'angle ou similaire sur un support, par lequel, dans une étape de marquage, un moyen de réalisation d'une piste à marquages est guidé au dessus du support et des marquages sont apposés par action sur le support dans celui-ci, par lequel les positions réelles des marquages de la piste par rapport à un point de référence sont mesurées, les différences entre les positions réelles mesurées et les positions théoriques sont déterminées, **caractérisé en ce qu'**en cas de différences existantes, dans une autre étape de marquage, des marquages corrigés sont apposés sur la même piste du support, les positions des marquages de la première étape de marquage par rapport aux positions des marquages de la deuxième étape de marquage étant modifiées de valeurs dépendant des différences.

2. Procédé selon la revendication 1, **caractérisé en ce que** les positions réelles de transition d'un marquage vers le marquage respectivement suivant sont mesurées, les différences avec les positions théoriques respectives des transitions sont définies et, que par la deuxième étape de marquage, les positions des transitions, qui présentent après la première étape de marquage une différence entre la valeur théorique et réelle sont décalées sur la piste d'une valeur dépendant de la différence définie précédemment.

3. Procédé selon l'une quelconque ou les deux revendications précédentes, **caractérisé en ce que** le marquage de la deuxième étape de marquage est superposé au marquage de la première étape de marquage, ce qui donne un marquage résultant des deux marquages.

4. Procédé selon l'une quelconque ou plusieurs des revendications précédentes, **caractérisé en ce que** la valeur dont les marquages de la deuxième étape de marquage sont décalés par rapport aux marquages de la première étape équivaut au double de la différence entre la valeur réelle et la valeur théorique.

5. Procédé selon l'une quelconque ou plusieurs des revendications précédentes 1 à 3, **caractérisé en ce que** la valeur dont les marquages de la deuxième étape de marquage sont décalés par rapport aux marquages de la première étape de marquage équivaut à la différence entre la valeur réelle et la valeur théorique.

6. Procédé selon l'une quelconque ou plusieurs des revendications précédentes, **caractérisé en ce que** succède aux deux premières étapes de marquage et à la première étape de mesure respectivement une autre étape de mesure et de marquage jusqu'à ce, par superposition des étapes de marquage, toutes les différences entre les valeurs réelles et théoriques se situent dans le cadre de tolérances prédéfinies.

7. Procédé selon l'une quelconque ou plusieurs des revendications précédentes, **caractérisé en ce que** la mesure des positions des différents marquages sur un support se réfère à un point de référence unique.

8. Procédé selon l'une quelconque ou plusieurs des revendications précédentes, **caractérisé en ce que**, pour mesurer une transition de marquages successifs, un équilibrage théorique/réel est réalisé pour une valeur ou un montant d'une certaine grandeur physique.

9. Procédé selon l'une quelconque ou plusieurs des revendications précédentes, **caractérisé en ce que**, pour mesurer une transition de marquages successifs, des positions de passages à zéro de grandeurs physiques sont définies.

10. Procédé selon l'une quelconque ou plusieurs des revendications précédentes, **caractérisé en ce que** les marquages sont des pôles magnétiques.

11. Procédé selon la revendication 10, **caractérisé en ce qu'**une induction magnétique des pôles se trouve après chaque étape de marquage dans la zone de saturation magnétique de la matière support et que chaque zone de transition d'un marquage vers un marquage suivant de la piste présente un passage à zéro de l'induction magnétique.

12. Procédé selon l'une quelconque ou plusieurs des revendications précédentes, **caractérisé en ce qu'**un interféromètre à laser est utilisé pour mesurer la position des valeurs réelles des marquages.

13. Procédé selon l'une quelconque ou plusieurs des revendications précédentes, **caractérisé en ce que** la mesure des positions des marquages réalisés immédiatement auparavant commence pendant la réalisation d'une étape de marquage.

14. Procédé selon l'une quelconque ou plusieurs des revendications précédentes, **caractérisé en ce que** le support se trouve, pendant l'autre étape de marquage, dans la même extension que pendant l'étape de marquage précédente.

15. Installation de réalisation de marquages (5, 6) sur un support (4), qui présente un dispositif de marquage qui est équipé d'un élément d'écriture (9) servant à l'apposition d'une piste (7) qui englobe plusieurs marquages (5, 6), d'un dispositif de serrage (2) servant à installer le support (4) dans l'installation et d'un dispositif de déplacement (8) grâce auquel peut être créé un mouvement relatif entre le support (4) et l'élément d'écriture (9), l'installation présentant un dispositif de mesure permettant de détecter les positions réelles des marquages (5, 6) ou de certains points des marquages (5, 6), des moyens de mémorisation des positions réelles mesurées, ainsi que des moyens de comparaison des positions réelles avec des positions théoriques prédéfinies des marquages (5, 6) ou de certains points des marquages (5, 6) et de détermination de l'écart entre les positions réelles et théoriques, grâce auxquels des marquages peuvent de nouveau être apposés sur la piste portant des marquages (5, 6) sur le support (4), les positions de ces autres marquages étant respectivement corrigées d'une valeur qui dépend des écarts précédemment déterminés.

16. Installation selon la revendication 15, **caractérisée en ce que** l'installation permet de réaliser des marquages magnétiques (5, 6), que celle-ci présente à cet effet un dispositif de marquage équipé d'une tête d'écriture magnétique (9), que le dispositif de mesure présente une tête de lecture magnétique (10) et que des moyens de changement de polarisation de la tête d'écriture (9) sont disponibles, le changement de polarisation étant réalisable sur la base des valeurs dépendant des écarts.

17. Utilisation d'une installation suivant l'une quelconque ou les deux revendications 15 et 16, **caractérisée en ce qu'**elle permet de réaliser des marquages d'un système de mesure de longueur d'un guide de mouvement linéaire.
